Europäisches Patentamt

European Patent Office

Office européen des brevets

(19)

(11) Publication number : **0 588 643 A1**

(12) # EUROPEAN PATENT APPLICATION

(21) Application number : **93307326.4**

(22) Date of filing : **16.09.93**

(51) Int. Cl.⁵ : **G08B 13/191**

(30) Priority : **17.09.92 JP 247468/92**

(43) Date of publication of application :
**23.03.94 Bulletin 94/12**

(84) Designated Contracting States :
**DE FR GB**

(71) Applicant : **MATSUSHITA ELECTRIC
INDUSTRIAL CO., LTD
1006, Oaza Kadoma, Kadoma-shi
Osaka 571 (JP)**

(72) Inventor : **Shimada, Takuo
3-5-502, Ayameike Minami-2-chome
Nara-shi (JP)**
Inventor : **Okuda, Isamu
16-33, Nango-4-chome
Otsu-shi (JP)**
Inventor : **Deguchi, Takashi
1915-133, Nojicho
Kusatsu-shi (JP)**
Inventor : **Nakayama, Morihiro
Osumi Haitsu 102, 2-15, Ohashi-5-chome
Rittocho, Kurita-gun, Shiga-ken (JP)**

(74) Representative : **Votier, Sidney David et al
CARPMAELS & RANSFORD 43, Bloomsbury
Square
London WC1A 2RA (GB)**

(54) **Thermal image detecting apparatus.**

(57)    An infrared sensor composed of an array of pyroelectric type heat detecting elements, a chopper, a chopper operation detecting means for detecting the operation of the chopper, a duty compensating means and a chopper failure detecting means are arranged. Thus, the actual opening and closing duty of the chopper can maintained to be uniform so as to detect a thermal image with a high degree of accuracy, and a failure of the chopper can be detected, thereby it is possible to enhance the reliability of the operation.

FIG. I

EP 0 588 643 A1

## BACKGROUND OF THE INVENTION

The present invention relates to an apparatus for detecting a temperature distribution in a home living room, a radiation temperature or a behavior of a human body with the use of a thermal image.

Conventionally, a quantum type infrared sensor and a thermal type infrared sensor have been used for measuring a temperature in a non-contact condition. The quantum type infrared sensor is high sensitive so as to be high responsive but requires cooling (about -200 deg. C), and accordingly it is not suitable for the normal livelihood. Meanwhile, the thermal type infrared sensor is relatively low sensitive so as to be low responsive, but however, no cooling is required so that it is commercially available.

Among various thermal type infrared sensors, a pyroelectric type infrared sensor has been frequently used. The pyroelectric type infrared sensor has a differential variation output characteristic so as to deliver an output only when the input temperature varies. Accordingly, the pyroelectric type infrared sensor incorporates a shutter which is opened and closed periodically. When a human body crosses in front of the pyroelectric type infrared sensor, the pyroelectric type infrared sensor receives a time dependent input in which the radiation temperature of the human body periodically bursts. According. the pyroelectric type infrared sensor delivers an output in synchronization with the time variation of the input. Further, a point sensor using a ceramic pyroelectric type infrared sensor and a chopper has been also available, but this sensor also low sensitive and is remarkably low responsive so that several tenths of temperature data cannot be obtained within one or two seconds. Further, an arrangement in which pyroelectric type infrared sensors are arrayed two-dimensionally so as to provide a means for obtaining a two-dimensional thermal image has been proposed. However, if the pyroelectric type infrared sensors are arrayed two-dimensionally, the arrangement becomes complicated.

Further, with a system in which an array of pyroelectric type heat detecting elements arranged direct above scans, the optical system therefor has to inevitably cover an entire scanning range if the optical system is arranged external of the array of pyroelectric type heat detecting elements, and accordingly, the optical system should have a large size. Even though the optical system can cover the entire scanning range, there is raised a problem such as that the sensitivity over the entire viewing field cannot be made to be uniform since the scanning range includes a position shifted largely from the optical axis of the optical system.

## SUMMARY OF THE INVENTION

One object of the present invention is to provide a miniaturized apparatus using an infrared sensor composed of an array of pyroelectric type heat detecting elements, having a structure and arrangement which are relatively simple.

To the end according to the present invention, there is provided a thermal image detecting apparatus comprising an array of pyroelectric type heat detecting elements arranged one-dimensionally on a straight line, and an infrared ray transmission lens integrally incorporated with the array of pyroelectric type heat detecting elements, a chopper for limiting the volume of infrared beams incident upon the array of pyroelectric type heat detecting elements through the infrared ray transmission lens, a chopper operation detecting means for detecting the operation of the chopper, and a rotary shaft in parallel with or inclined at a predetermined angle from the straight line, whereby the array of pyroelectric type heat detecting elements and the infrared ray transmission lens are rotated about the rotary shaft so as to obtain a two dimensional thermal image.

Further, according to one specific form of the present invention, a shutter which blocks light and infrared rays is used as the chopper, and a light detecting elements which detects the presence of light transmission so as to determine the opening and closing conditions of the shutter is used in the chopper operation detecting means.

Further, according to another specific form of the present invention, there is provided a duty compensating means for changing the opening control time and the closing control time of the chopper in accordance with a signal which is delivered from the chopper operation detecting means during detection of a two-dimensional image by rotation, so as to maintain the time ratio between the chopper opening and closing conditions in a predetermined range.

Further, according to another specific form of the present invention, the chopper is driven before detection of a two-dimensional image by rotation, and there is provided a duty compensating means for changing the opening control time and the closing control time of the chopper in accordance with a signal which is delivered from the chopper operation detecting means, so as to maintain the time ratio between the chopper opening and closing conditions in a predetermined range.

Further, according to another specific form of the present invention, there is provided a failure detecting means for detecting a failure of the chopper in accordance with a signal which is delivered from the chopper operation detecting means during detection of a two-dimensional thermal image by rotation,

Further, according to another specific form of the present invention, the chopper is driven before detection of a two-dimensional thermal image, and there is provided a failure detecting means for detecting a failure of the chopper in accordance with a signal from the chopper operation detecting means.

Thus, as mentioned above, the present invention can provide a miniaturized and simple two dimensional thermal image detecting apparatus in such a way that the array of pyroelectric type heat detecting elements and the optical system are rotated integrally with each other. Further, the chopper operation detecting means for detecting the operation of the chopper confirms the opening and closing conditions of the chopper which actually occur due to the mechanical operation of the chopper, and accordingly a temperature difference between an object to be measured and the chopper can be more precisely detected. In particular, with the provision of the duty compensating means, the actual opening and closing duty of the chopper can be automatically held in a predetermined range. Further, with the provision of the failure detecting means, a failure relating to the opening and closing operation of the chopper can be at once detected.

Other features and advantages of the invention will be apparent from the following description taken in conjunction with the accompanying drawings wherein:

BRIEF DESCRIPTION OF THE DRAWING

Fig. 1 is a block diagram illustrating an embodiment of the present invention;
Fig. 2 is a schematic view illustrating an infrared sensor in the embodiment shown in Fig. 1;
Figs. 3a and 3b are views for explaining the manner of obtaining a thermal image;
Fig. 4 is an exploded perspective view illustrating a chopper in the embodiment shown in Fig. 1; a
Fig. 5 is a flow-chart for explaining the operation of a duty compensating part in the embodiment shown in Fig. 1; and
Fig. 6 is a flow-chart for explaining the operation of a failure detecting part in the embodiment shown in Fig. 1.

DETAILED DESCRIPTION OF THE INVENTION

Explanation will be hereinbelow made of a two-dimensional thermal image detecting apparatus in one embodiment of the present invention.

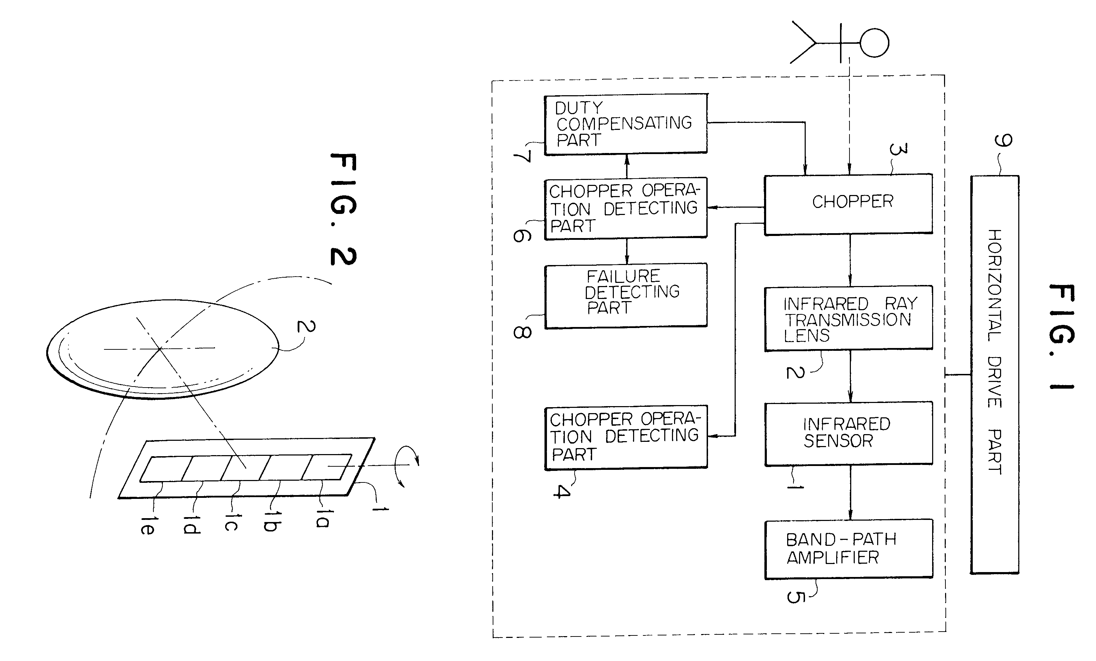

Referring to Fig. 1, an infrared sensor 1 is composed of an array of, for example, five pyroelectric type heat detecting elements 1a to 1e as shown in Fig. 2, which are arranged on a straight line so that the vertical viewing field angle is divided into five zones which are scanned by the five pyroelectric type heat detecting elements 1a to 1e. An infrared ray transmission lens 2 is arranged so that a thermal image is focused onto the pyroelectric type heat detecting elements. The infrared sensor 1 and the infrared ray transmission lens 2 are integrally incorporated with each other so that the optical axis of the lens 2 passes through the center of the array of pyroelectric type heat detecting elements. Further, there are shown a chopper 3 using a shutter which blocks light and infrared rays, a chopper temperature detecting part 4 for detecting a temperature of the chopper 3, a bandpass amplifying part 5 for bandpass-amplifying a slight voltage delivered from the infrared sensor 1, which is incorporated corresponding to the pyroelectric type heat detecting elements, a chopper operation detecting part 6 composed of an optical detecting element for detecting the presence of light transmission so as to determine an actual opening or closing condition of the shutter in the chopper 3, which is connected to a duty compensating part 7 and a failure detecting part 8, and a horizontal drive part 9. It is noted that the components 1 to 8 as mentioned above are integrally incorporated with each other.

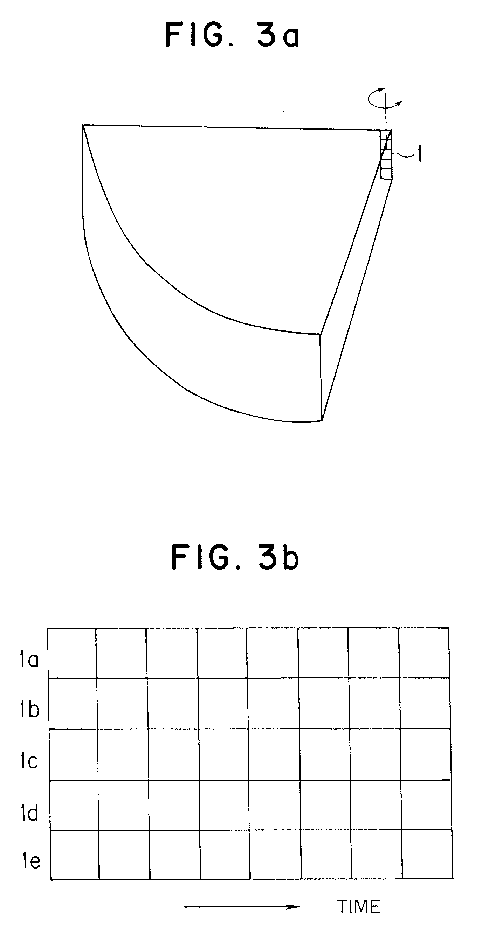

Explanation will be made of a manner such that a two dimensional thermal image is obtained by the pyroelectric type heat detecting elements which are arranged in a longitudinal row with reference to Fig. 3a to 3b. Fig. 3a shows a three-dimensional viewing angle for a thermal image to be detected. Fig. 3b shows the detected thermal image. The horizontal viewing angle of the infrared sensor 1 composed of the array of pyroelectric type heat detecting elements is set be small, and the sensor scans over a required horizontal viewing angle by the rotation of the horizontal drive part 9. The opening and closing operations of the shutter in the chopper 3 is uniformly and successively made so that the infrared sensors measures temperatures in a vertical direction in synchronization with the rotation of the horizontal drive part 9. With the successive and uniform repetitions of the opening and closing operations of the shutter in the chopper 3, the thermal image shown in Fig. 3b can be obtained.

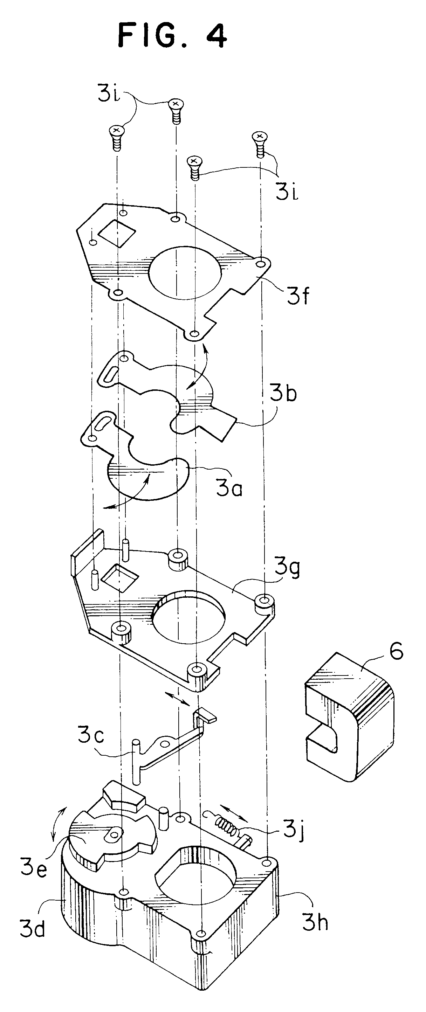

Referring to Fig. 4 which shows the components to be assembled in the chopper 3, metal shutter blades 3a, 3b for blocking light and infrared rays are opened and closed in association with the rotation of an S-like link plate 3c. Just after the change from the closing condition into the opening condition of the shutter blades 3a, 3b or just after the change from the opening condition into the closing condition of the shutter blades 3a, 3b, the infrared sensor 1 delivers a voltage in accordance with a temperature difference between an object to be measured and the shutter blades. The rotation of the S-like link plate 3c is transmitted through a cam 3e coupled to the rotary shaft of a reversible motor 3d as indicated by hatched lines. Further, in Fig. 4, there are shown attaching retainer plates 3f, 3g, 3f, screws 3i, a metal spring 3j. When no opening and closing instruction signal is applied to the reversible motor 3d, the shutter blades 3a, 3b are held in the closed condition, being urged by the tension force of the metal spring 3j. In Fig. 4, the parts which are moved during shutter opening and closing operation are indicated by arrows.

It is noted that the chopper operation detecting part 6 composed of the optical detecting element, is arranged so as to receive therein a protrusion on the shutter blade 3b. Thus, the chopper operation detecting part 6 allows light to transmit if this shutter falls into its opening condition but blocks the light if this shutter falls into its closing condition so as to detect the operation of the chopper 3. A phototransistor or a photo-interrupter may be used as the optical detecting element.

Referring to Fig. 1, the duty compensating part 7 calculates the time ratio between the opening and closing conditions of the chopper 3 from a signal from the chopper operation detecting part 6 so as to change the opening control time of the chopper 3 and the closing control time of the chopper 3 so as to always maintain this time ratio at 50 %. Alternatively, the chopper 3 is driven before detection of a two-dimensional thermal image by horizonal rotation, and accordingly, the time ratio between the opening condition and the closing condition of the chopper is calculated from a signal from the chopper operation detecting part 6 so as to change the opening operation time and the closing operation time of the chopper 3 so as to previously compensate the time ratio so that it is set to 50 %.

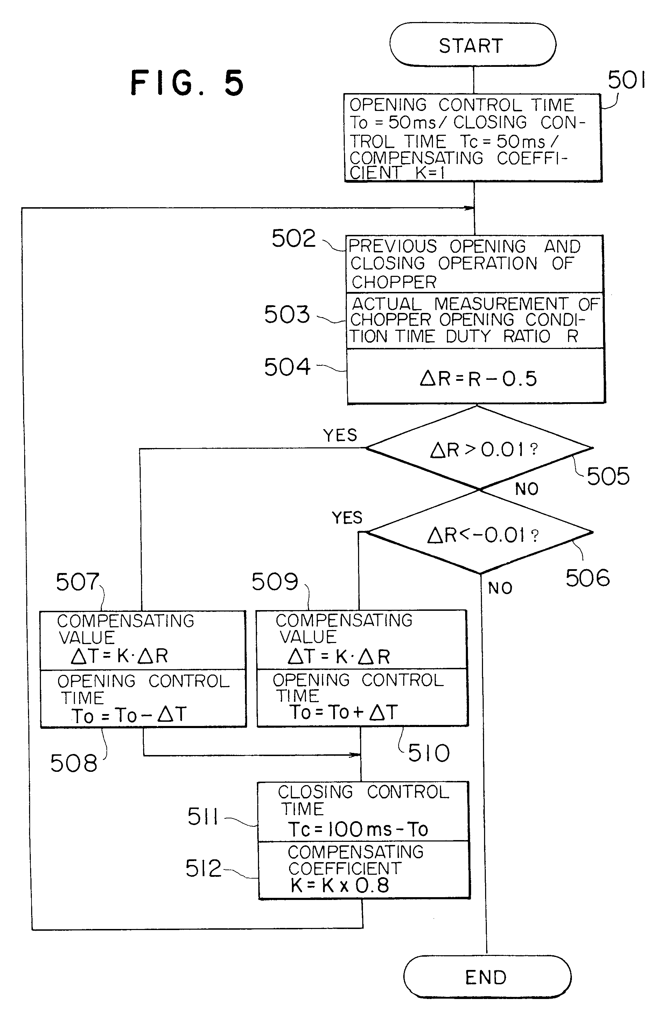

Explanation will be hereinbelow made of the operation of the duty compensating part 7 with reference to a flow-charge shown in Fig. 5. Estimation is made here such that the opening and closing frequency of the chopper 3 is fixed to 10 Hz. Further, the explanation is only directed to the operation before detection of a two-dimensional thermal image. At step 501, the opening control time To with which the reversible motor 3d is shifted into and held in the opening condition is set to 50 ms as an initial value, and the closing control time Tc with which the reversible motor 3d is shifted into and held in the closing condition is set to 50 ms as an initial value while the compensating coefficient k is set to 1. At step 502, the previous chopper opening and closing operation is carried out with the used of the thus set opening control time To and the closing control time Tc. During the opening and closing operation of the chopper, no horizontal rotation is not made, and accordingly, voltages delivered from the infrared sensor are not used as temperature data. At step 503, a duty R (R = opening detection time/0.1 sec) is calculated from the time of the opening condition of the chopper 3 which is measured with the use of a signal from the chopper operation detecting part 6. Further, at step 504, $\Delta R$ ($\Delta R = R - 0.5$) is calculated, and thereafter, if $\Delta R$ is larger than 0.01 (step 505), the procedure is shifted to step 507, but if it is small than - 0.01 (step 506), the procedure is shifted to step 509. If it does not fall in either of both cases ($0.01 \leqq \Delta R \leqq 0.01$), the duty R is actually regarded as being substantially 50 % so that the procedure is completed. Since the actual opening time can be regarded as being too large at steps 507, 108, the setting is made such that a compensating value $\Delta T$ ($\Delta T = k*\Delta R$) is subtracted from the opening control time To having been beforehand set (To = To - $\Delta T$). Meanwhile since the actual opening time is regarded as being too short at steps 509, 510, the setting is made such that the compensating value $\Delta T$ (= $k*\Delta R$) is added to the opening control time having been beforehand set (To = To + $\Delta T$). At step 511, corresponding to the resetting of the opening control time To at step 508 or 510, the closing control time Tc is set as Tc = 100 ms - To since the opening and closing frequency is fixed at 10 Hz. At step 512, the compensating coefficient k is changed to k = k*0.8, and thereafter, the procedure jumps to step 502. With the repetitions of this loop, the actual duty R can be surely converged to about 50 %.

It is noted that the method of compensating the opening and closing duty should not be limited to the above-mentioned method. For example, the compensating value $\Delta T$ may be derived either from an arithmetic expression other than that stated above or from a map table. In view of the arrangements of the chopper 3 and the chopper operation detecting part 6, the conditions of determination of R and $\Delta R$ should not limited to those stated above. Further, the cycle numbers of the repetitions of the compensation, and the opening and closing control times To, Tc may be limited to certain values. Further, the duty compensation may be made by feeding back a signal from the chopper operation detecting part 6 on a real time base during detection of a two-dimensional thermal image or during horizontal rotation.

In view of the Stefan Bolzmann's Law of radiation, the following equation can be derived:

$$Vs = K * (Tb^4 - Ta^4)$$

where Vs is output voltage from the infrared sensor 1, Ta is temperature of the chopper, Tb is temperature of the object to be measured, and K is constant. In the case of the horizontal rotation of the infrared sensor 1 composed of the pyroelectric type heat detecting elements which are one-dimensionally arranged, for detecting a two-dimensional thermal image, the opening and closing operation of the shutter should be repeated uniformly in synchronization with the horizontal rotation of the infrared sensor 1. That is, the opening and closing instruction signal delivered to the reversible motor 3d has not to maintain its duty at 50 %, but the chopper has to maintain its actual opening and closing duty at 50 %. Meanwhile, with an arrangement as shown in Fig. 4, the time delay with which the opening condition is turned into the closing condition is different from the time delay with which the closing condition is turned into the opening condition. Further, the time delay is not uniform or uneven due to differences in an embodiment temperature or among apparatus, and due to aging effects. With the provision of the chopper operation detecting part 6 and the duty compensating part 7, a mechanical time delay with which the shutter blades 3a, 3b actually start opening in response to an opening and closing control signal delivered to the reversible motor 3d, an opening time and a closing time are actually measured at every cycle for every apparatus so as to maintain the actual opening and closing duty of the chopper at 50 %, and accordingly, it is possible to always obtain the temperature of an object to be measured with a high degree of accuracy.

The failure detecting part 8 detects a failure of the chopper 3 in such a way that the chopper 3 is driven before detection of a two-dimensional thermal image by horizontal rotation, and accordingly, it calculates the time ratio between the opening condition and closing conditions with respect to an object to be measured, from a signal delivered from the chopper operation detecting part 6, so as to detect an failure of the chopper 3.

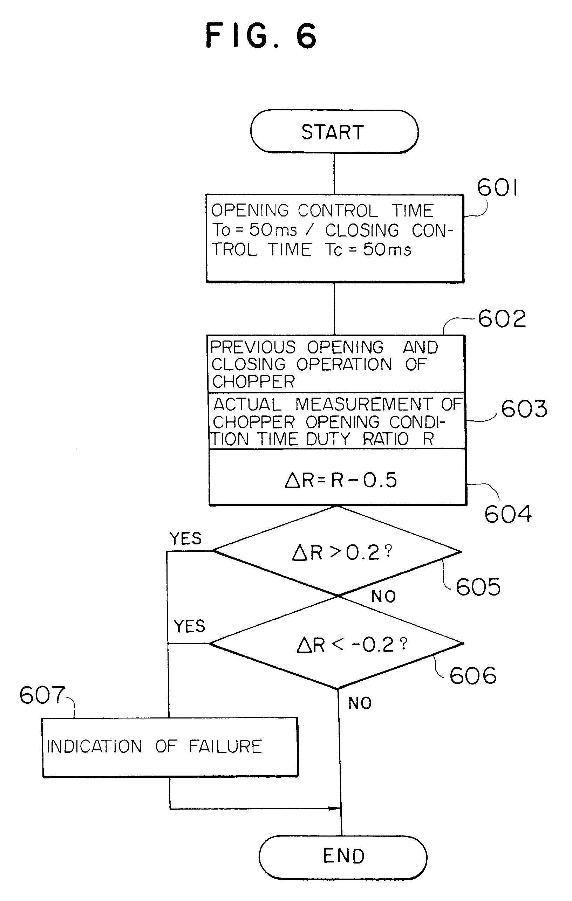

Explanation will be hereinbelow made of the operation of the failure detecting part 8 with reference to a flow-chart shown in Fig. 6. In this case, an estimation is made such that the opening and closing frequency of the chopper 3 is fixed to 10 KHz, similar to the operation of the duty compensating part 7.

At step 601, the opening control time To with which the reversible motor 3d in the chopper 3 is shifted into and held in its opening condition is set to 50 ms as an initial value, and the closing control time Tc with which the reversible motor 3d is shifted into and held in its closing condition is set to be 50 ms as an initial value. At step 602, with the use of the thus set closing and opening control times Tc, To, the chopper is previously opened and closed. During this previous operation of the chopper 3, the horizontal rotation is not made, and further, voltages delivered from the infrared sensor 1 are not used as temperature data. At step 603, the duty R (R = opening time/0.1 sec) is calculated from the time of the opening condition of the chopper 3 which is measured from a signal delivered by the chopper operation detecting part 6. Further, at step 604, $\Delta R$ ($\Delta R$ = R - 0.5) is calculated, and thereafter, if $\Delta R$ is larger than 0.2 or less than -0.2 (steps 605, 606), the chopper is regarded as failing so that the procedure is shifted to step 607. If it is not the case ($0.2 \leqq \Delta R \leqq 0.2$), the chopper 3 is regarded as being normally operated so that the procedure is completed. At step 608, a failure of the apparatus is indicated, and thereafter, the detection of an two-dimensional thermal image is interrupted. For example, irrespective of the opening and closing control, if $\Delta R$ is still maintained to be 0.1, the chopper 3 remains in its opening condition, and further if $\Delta R$ is still maintained to be 0.0, the chopper 3 remains in its closing condition. Thus, it is found that an output voltage from the infrared sensor is useless or meaningless. Further, if the absolute value of $\Delta R$ is large so that no compensation cannot be made therefor, a failure can be previously found, similarly. With this arrangement, it is possible to enhance the reliability of the apparatus.

It is noted that the method of detecting a failure should not limited to the above-mentioned method. The previous chopper opening and closing operation using the closing control time Tc is repeated by several cycles so as to obtain $\Delta R$, and if the unevenness of the thus obtained $\Delta R$ becomes larger than a predetermined value, it may be regarded as being abnormal. Further, a failure may be detected by feeding back a signal from the chopper operation detecting part 6 on a real time base during detection of a two-dimensional thermal image or the horizontal rotation.

According to the present invention, the array of pyroelectric heat detecting elements which are one-dimensionally laid on a straight line, and the optical system are rotated integrally with each other, and accordingly, a two-dimensional thermal image can be obtained with a miniaturized and simple arrangement.

Further, the chopper operation detecting part for detecting the operation of the chopper confirms an opening condition and a closing condition which occur actually during mechanical operation of the chopper, and accordingly, the temperature difference between an object to be measured and the chopper can be precisely detected.

In particular, since the opening and closing duty of the chopper is maintained to be constant on a real time base during detection of a two-dimensional thermal image, it is possible to minimize mechanical unevenness.

Further, since an optimum opening and closing duty of the chopper is set before the detection of a two-dimensional thermal image, it is possible cope with electrical and mechanical unevenness among the apparatus, variations in ambient temperature, aging effect or the like.

Further, since a failure of the chopper is detected during the detection of a two-dimensional thermal image on a real time base, instant power failure, wire breakage, mechanical lock of the chopper or the like can be found during operation, and accordingly, erroneous temperature measurement can be eliminated so that it is possible to greatly enhance the reliability.

Further, a failure of the chopper is detected before the detection of a two-dimensional thermal image, it is possible to prevent useless temperature measurement, and thereby it is possible to save energy.

## Claims

1. A two-dimensional thermal image detecting apparatus comprising:

an array of pyroelectric type heat detecting elements arranged one-dimensionally on a straight line;

an infrared ray transmission lens integrally incorporated with the array of pyroelectric type heat detecting elements;

a chopper for limiting the quantity of infrared lays incident upon said array of pyroelectric type heat detecting elements through the intermediary of said infrared ray transmission lens;

a chopper operation detecting means for detecting the operation of said chopper; and

a rotary shaft laid in parallel with or inclined at a predetermined angle from said straight line,

whereby said array of pyroelectric type heat detecting elements is rotated about said rotary shaft so as to obtain a two-dimensional thermal image.

2. An apparatus as set forth in claim 1, wherein said chopper is composed of a shutter which blocks light and infrared rays, and said chopper operation detecting means is composed of an optical detecting element for determining whether said shutter is in an opening condition or a closing condition in accordance with the presence of light transmission.

3. An apparatus as set forth in claim 1, further comprising a duty compensating means, wherein said duty compensating means changes the opening control time and the closing control time of said chopper so as to maintain the time ratio between the opening condition and the closing condition of said chopper within a predetermined range in accordance with a signal from said chopper operation detecting means which is delivered during detection of a two-dimensional thermal image by rotation.

4. An apparatus as set forth in claim 1, further comprising a duty compensating means, wherein said chopper is driven before detection of a two-dimensional thermal image by rotation, and said duty compensating means changes the opening control time and the closing control time of said chopper so as to maintain the time ratio between the opening condition and the closing condition of said chopper in accordance with a signal from said chopper operation detecting means.

5. An apparatus as set forth in claim 1, further comprising a failure detecting means, wherein said failure detecting means detects a failure of said chopper in accordance with a signal from said chopper operation detection means, which is delivered from said chopper operation detecting means during detection of a two-dimensional thermal image by rotation.

6. An apparatus as set forth in claim 1, further comprising a failure detecting means, wherein said chopper is driven before detection of a two-dimensional thermal image by rotation, and said failure detecting means detects a failure of said chopper in accordance with a signal from said chopper operation detecting means.

# FIG. 1

9 — HORIZONTAL DRIVE PART

3 — CHOPPER

INFRARED RAY TRANSMISSION LENS — 2

INFRARED SENSOR — 1

BAND - PATH AMPLIFIER — 5

DUTY COMPENSATING PART — 7

CHOPPER OPERATION DETECTING PART — 6

FAILURE DETECTING PART — 8

CHOPPER OPERATION DETECTING PART — 4

# FIG. 2

1

1a
1b
1c
1d
1e

2

# FIG. 3a

# FIG. 3b

TIME

# FIG. 4

# FIG. 5

```
                    ┌──────────┐
                    │  START   │
                    └────┬─────┘
                         │
         ┌───────────────────────────────────┐  501
         │ OPENING CONTROL TIME              │
         │ To = 50ms / CLOSING CON-          │
         │ TROL TIME  Tc = 50ms /            │
         │ COMPENSATING COEFFI-              │
         │ CIENT  K=1                        │
         └───────────────┬───────────────────┘
                         │
    ┌────────────────────┴───────────────────┐
    │                                         │
    │   502  ┌─────────────────────────────┐ │
    │        │ PREVIOUS OPENING  AND       │ │
    │        │ CLOSING OPERATION  OF       │ │
    │        │ CHOPPER                     │ │
    │        ├─────────────────────────────┤ │
    │   503  │ ACTUAL MEASUREMENT OF       │ │
    │        │ CHOPPER OPENING CONDI-      │ │
    │        │ TION TIME DUTY RATIO  R     │ │
    │        ├─────────────────────────────┤ │
    │   504  │      ΔR = R − 0.5           │ │
    │        └─────────────────────────────┘ │
```

501 OPENING CONTROL TIME To = 50ms / CLOSING CONTROL TIME Tc = 50ms / COMPENSATING COEFFICIENT K=1

502 PREVIOUS OPENING AND CLOSING OPERATION OF CHOPPER

503 ACTUAL MEASUREMENT OF CHOPPER OPENING CONDITION TIME DUTY RATIO R

504 $\Delta R = R - 0.5$

505 $\Delta R > 0.01$ ? — YES / NO

506 $\Delta R < -0.01$ ? — YES / NO

507 / 508 COMPENSATING VALUE $\Delta T = K \cdot \Delta R$ / OPENING CONTROL TIME $To = To - \Delta T$

509 / 510 COMPENSATING VALUE $\Delta T = K \cdot \Delta R$ / OPENING CONTROL TIME $To = To + \Delta T$

511 CLOSING CONTROL TIME $Tc = 100ms - To$

512 COMPENSATING COEFFICIENT $K = K \times 0.8$

END

# FIG. 6

```
                    ┌──────────────┐
                    │    START     │
                    └──────┬───────┘
                           │
        ┌──────────────────┴──────────────┐  601
        │ OPENING CONTROL  TIME           │
        │ To = 50ms / CLOSING CON-        │
        │ TROL TIME  Tc = 50ms            │
        └──────────────────┬──────────────┘
                           │                  602
        ┌──────────────────┴──────────────┐
        │ PREVIOUS OPENING   AND          │
        │ CLOSING OPERATION  OF           │
        │ CHOPPER                         │
        ├─────────────────────────────────┤  603
        │ ACTUAL  MEASUREMENT OF          │
        │ CHOPPER OPENING CONDI-          │
        │ TION TIME DUTY  RATIO  R        │
        ├─────────────────────────────────┤
        │          △R= R − 0.5            │
        └──────────────────┬──────────────┘  604
```

$To = 50\,ms$ / $Tc = 50\,ms$ (601)

$\triangle R = R - 0.5$ (604)

605: $\triangle R > 0.2$ ?   YES / NO

606: $\triangle R < -0.2$ ?   YES / NO

607: INDICATION OF FAILURE

```
                    ┌──────────────┐
                    │     END      │
                    └──────────────┘
```

EP 0 588 643 A1

| | European Patent Office | EUROPEAN SEARCH REPORT | Application Number EP 93 30 7326 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 501 253 (CERBERUS)<br>* page 3, line 25 - line 58; figures 1-4 *<br>--- | 1 | G08B13/191 |
| Y | US-A-4 684 804 (D. SODEIKAT)<br>* column 4 - column 5, line 24; figure 1 *<br>----- | 1 | |

TECHNICAL FIELDS SEARCHED (Int.Cl.5)

G08B
G01S

The present search report has been drawn up for all claims

| Place of search | Date of completion of the search | Examiner |
|---|---|---|
| THE HAGUE | 27 December 1993 | Sgura, S |